Europäisches Patentamt

European Patent Office

Office européen des brevets

(19)

(11) Veröffentlichungsnummer : **0 141 130**
**B1**

(12) **EUROPÄISCHE PATENTSCHRIFT**

(45) Veröffentlichungstag der Patentschrift :
06.05.87

(21) Anmeldenummer : 84110249.4

(22) Anmeldetag : 29.08.84

(51) Int. Cl.⁴ : **H 04 N   9/81, H 04 N   5/95**

(54) **Zeitsequentielles Fernseh-Übertragungssystem, insbesondere für einen Videorecorder.**

(30) Priorität : 10.09.83 DE 3332661

(43) Veröffentlichungstag der Anmeldung :
15.05.85 Patentblatt 85/20

(45) Bekanntmachung des Hinweises auf die Patenterteilung : 06.05.87 Patentblatt 87/19

(84) Benannte Vertragsstaaten :
**AT BE CH DE FR GB IT LI LU NL SE**

(56) Entgegenhaltungen :
**DE-A- 3 330 030**
**NACHRICHTEN ELEKTRONIK, 35 (1981), Heft 12 L.P. WENGERT "Korrektur des Zeitbasisfehlers bei Vielkanal-Magnetbandaufzeichnungen", Seiten 497-499**

(73) Patentinhaber : **Deutsche Thomson-Brandt GmbH**
**Hermann-Schwer-Strasse 3 Postfach 2060**
**D-7730 Villingen-Schwenningen (DE)**

(72) Erfinder : **Geiger, Erich**
**Panorama-Weg 19**
**D-7731 Unterkirnach (DE)**
Erfinder : **Otto, Bernhard**
**Überruckweg 13**
**D-7730 VS-Rietheim (DE)**
Erfinder : **Kaaden, Jürgen**
**Im Tannhörnle 10**
**D-7730 VS-Pfaffenweiler (DE)**

EP 0 141 130 B1

Jouve, 18, rue St-Denis, 75001 Paris, France

## Beschreibung

Stand der Technik

Bei der Aufzeichnung eines Farbfernsehsignals mit einem Magnetbandgerät ist es bekannt (radio mentor elektronik 1973, H. 8 S. 343-345), das Leuchtdichtesignal durch Frequenzmodulation eines Bildträgers und die Farbsignale mit einem Farbträger aufzuzeichnen, der unterhalb des von dem Bildträger eingenommenen Frequenzspektrums liegt. Zu diesem Zweck wird die Frequenz des quadraturmodulierten Farbträgers von 4,43 MHz auf einen Wert in der Größenordnung von 0,63 MHz heruntergesetzt und bei der Wiedergabe wieder entsprechend auf den Wert von 4,43 MHz rückumgesetzt.

Diese Art der Aufzeichnung hat den Nachteil, daß durch Nichtlinearitäten des Aufzeichnungsträgers ein Übersprechen zwischen dem Leuchtdichtesignal und dem Farbträger auftritt. Um eine Beeinflussung des Leuchtdichtesignals durch den Farbträgers gering zu halten, muß die Amplitude des Farbträgers gegenüber der des Bildträgers beträchtlich abgesenkt werden, wodurch der Störabstand bei der Farbwiedergabe verringert wird.

Es ist auch bekannt (DE-PS 20 56 684), das Leuchtdichtesignal und das Farbsignal zeitlich zu komprimieren, während einer Zeilendauer zeitlich nacheinander aufzuzeichnen und bei der Wiedergabe zeitlich zu expandieren und wieder gleichzeitig verfügbar zu machen. Das Farbsignal nimmt dabei z. B. etwa 20 % und das Leuchtdichtesignal 80 % der Zeilenhinlaufzeit ein. Da bei dieser Lösung niemals Leuchtdichtesignal und Farbsignal gleichzeitig, sondern zeitlich nacheinander aufgezeichnet sind, wird ein Übersprechen zwischen diesen Signalen mit Sicherheit vermieden. Außerdem kann der Aussteuerbereich des Aufzeichnungsträgers für beide Signale voll ausgenutzt werden.

Bei einem unter dem Namen « Timeplex » bekannten Aufzeichnungsverfahren dieser Art (Fernseh- und Kino-Technik 1983, Nr. 5, S. 187-196, insbesondere Seite 193-194) werden abwechselnd in einer Zeile nach dem Zeilensynchronimpuls zunächst das zeitkomprimierte Farbdifferenzsignal (B — Y) und anschließend das zeitkomprimierte Leuchtdichtesignal Y und in der nächsten Zeile zunächst das zeitkomprimierte Farbdifferenzsignal (R — Y) und das zeitkomprimierte Leuchtdichtesignal Y übertragen. Die Zeitkompression bei der Aufnahme und die Zeitexpansion bei der Wiedergabe erfolgen dabei mit getakteten Speichern, in die Signale mit einem ersten Takt eingelesen und entsprechend der Zeitkompression oder der Zeitexpansion mit einem anderen Takt wieder ausgelesen werden.

Bei einem derartigen System werden also bei der Wiedergabe jeweils in einer Zeile das Farbdifferenzsignal und das Leuchtdichtesignal wieder auf die Länge der Zeilenhinlaufzeit zeitlich expandiert und für die Bildwiedergabe gleichzeitig verfügbar gemacht.

Es hat sich in der Praxis gezeigt, daß bei der Wiedergabe zeitliche Verschiebungen zwischen dem Leuchtdichtesignal und dem Farbdifferenzsignal auftreten, die zu Verfälschungen bei der Farbwiedergabe führen. Eine Verschiebung zwischen den beiden Signalen um 1 µs bedeutet auf dem Bildschirm mit einer Bilddiagonalen von 65 cm bereits eine Verschiebung in der Größenordnung von 10 mm, wodurch insbesondere bei senkrechten Kanten starke Farbtonfehler und sogenannte Farbverschmierungen auftreten können.

Bei der zeitsequentiellen Übertragung der zeitlich komprimierten Signale können bei der Wiedergabe auch weitere Fehler wie Phasen-Amplituden- und/oder Gruppenlaufzeitunterschiede zwischen den beiden Signalen auftreten.

Es ist zwar möglich, jeweils eine Wiedergabeschaltung so einzustellen, daß die beiden für die Wiedergabe benötigten Signale, z. B. das Leuchtdichtesignal und das Farbdifferenzsignal, im richtigen Verhältnis zueinander stehen, d. h. insbesondere zeitlich übereinstimmen und das richtige Amplitudenverhältnis haben. Bei der Wiedergabe mit einem anderen Wiedergabegerät oder auch nach einer Überspielung bei einem Aufzeichnungssystem ist jedoch diese Übereinstimmung nicht mehr gewährleistet.

Der Erfindung liegt die Aufgabe zugrunde, das beschriebene zeitsequentielle System so weiterzubilden, daß bei der Wiedergabe die genannten Abweichungen zwischen den beiden Signalen, insbesondere hinsichtlich zeitlicher Lage, Amplitude und Phase vermieden werden.

Diese Aufgabe wird durch die im Anspruch 1 beschriebene Erfindung gelöst. Vorteilhafte Weiterbildungen der Erfindung sind in den Unteransprüchen beschrieben.

Die Erfindung beruht auf folgender Überlegung. Die beiden gleichen Signale in den beiden Signalwegen stehen auf der Sendeseite in einer definierten Beziehung zueinander, insbesondere hinsichtlich zeitlicher Lage und Amplitude. Vorzugsweise sind die beiden bei der erfindungsgemäßen Lösung verwendeten Markiersignale identisch, indem z. B. zu den definierten Zeitpunkten das erste Signal zusätzlich zu seinem eigenen Signalweg den Signalweg des zweiten Signals durchläuft. Alle bei der Zeitkompression, der Übertragung und der Zeitexpansion auftretenden Fehler wirken sich daher auch auf die Markiersignale aus, indem diese z. B. bei der Wiedergabe eine zeitliche Verschiebung zueinander haben. Auf der Empfangsseite kann also durch Vergleich der Markiersignale ein Korrektursignal gewonnen werden, das bei der Übertragung entstandene Fehler anzeigt. Mit diesem Korrektursignal können dann die aufgetretenen Fehler durch Beeinflussung des ersten Signals oder des zweiten Signals auf der Empfangsseite beseitigt werden.

Die Erfindung ist besonders vorteilhaft anwendbar bei der Übertragung oder Aufzeichnung eines Farbfernsehsignals nach dem genannten Timeplex-Aufzeichnungsverfahren. Dabei wird von folgenden Überlegungen und Erkenntnissen ausgegangen:

Bei der Zeitexpansion bei der Wiedergabe sind alle Impulse von der Vorderflanke des Zeilensynchronimpulses abhängig. Da der Kompressionsfaktor für das Leuchtdichtesignal und das Synchronsignal gleich ist, werden Toleranzen und Zeitverschiebungen bei der Wiedergabe bei einem Videorecorder automatisch ausgeglichen. Das Farbsignal hingegen durchläuft einen hiervon abweichenden Signalweg. Durch den höheren Kompressions- und Expansionsfaktor machen sich zeitliche Abweichungen wesentlich stärker bemerkbar als im Weg des leuchtdichtesignals. Wenn zwischen Aufnahme und Wiedergabe ein Zeitfehler auftritt, so wird dieser für das Farbsignal und den Expansionsfaktor vergrößert auftreten.

Bei einer Ausführungsform der Erfindung wird bewußt im Weg des Leuchtdichtesignals und des Farbsignals einem definierten Zeitpunkt einer Zeile ein Markierimpuls zugeordnet. Jegliche Zeitverschiebungen zwischen dem Leuchtdichtesignal und dem Farbsignal bei der Wiedergabe wirken sich dann auch auf die zeitliche Lage dieser beiden Markierimpulse aus. Durch Auswertung der zeitlichen Lage der beiden Markierimpulse zueinander, d. h. der Abweichung dieser zeitlichen Lage von einem bei der Aufnahme vorgegebenen Sollwert, kann somit eine Stellgröße gewonnen werden, die das Maß der zwischen dem Leuchtdichtesignal und dem Farbsignal auftretenden Zeitverschiebung anzeigt. Mit dieser Stellgröße kann somit eines der beiden Signale zeitlich so verschoben werden, daß die Markierimpulse und damit zwangsläufig auch das Leuchtdichtesignal und das Farbsignal jeweils in einer Zeile in ihrer zeitlichen Lage übereinstimmen.

Der Markierimpuls kann unterschiedliche Formen haben, da er im wesentlichen nur einen bestimmten Zeitpunkt einer Zeile markieren soll. Vorzugsweise ist der Markierimpuls ein sogenannter Schwarz/Weiß-Sprung, um den vollen Austeuerbereich auszunutzen. Der Markierimpuls kann auch aus mehreren aufeinander folgenden Einzelimpulsen bestehen. Bei der Wiedergabe erfolgt dann der Vergleich der zeitlichen Lage zwischen dem n-ten Impuls im Leuchtdichtesignalweg und dem n-ten Impuls im Farbsignalweg. Als Markierimpuls kann auch ein bereits im Signal vorhandener Impuls ausgenutzt werden, z. B. der Zeilensynchronimuls. Dieser müßte dann dem Farbsignal zusätzlich hinzugefügt werden. Als Markierimpuls kann auch der im Weg des Farbsignals vorhandene Impuls für den Unbuntwert ausgenutzt werden, der ebenfalls eine definierte Lage zur Zeilenperiode hat und mit seiner Amplitude den Unbuntwert, d. h. (R—Y) = 0 und (B—Y) = 0 anzeigt und mit seiner Dauer das jeweilige Farbdifferenzsignal, d. h. B—Y oder R—Y, identifiziert.

Es ist auch möglich, das Signal des ersten Signalweges, z. B. das Leuchtdichtesignal Y in den anderen Signalweg für das Farbsignal C einzukoppeln, worauf auf der Empfängerseite aus dem Signalunterschied der beiden Kanäle ein Korrektursignal abgeleitet wird.

Die Übertragung der Markierimpulse erfolgt vorzugsweise während der Vertikalaustastlücke im Bereich der Prüfzeilen, z. B. in den Zeilen 17 und 18 sowie in den Zeilen 330 und 331. An sich ist es ausreichend, wenn der Markierimpuls in den beiden Signalwegen nur in einer Zeile übertragen wird. Vorzugsweise werden die Markierimpulse in beiden Signalwegen in zwei aufeinander folgenden Zeilen übertragen, weil aufgrund der Eigenart des Timeplex-Systems bei der Wiedergabe jeweils das Leuchtdichtesignal aus der Zeile n-1 und Farbdifferenzsignal aus der Zeile n gleichzeitig erscheinen.

Es ist ausreichend, wenn die Markierimpulse periodisch in einem größeren Abstand übertragen werden, weil es sich bei der Verschiebung der Signale um einen relativ langsamen Fehler handelt. Die gewonnene Stellgröße für die Korrektur bei der Wiedergabe ändert sich in der Praxis relativ langsam. Vorzugsweise erfolgt die Übertragung der Markierimpulse jeweils zu Beginn eines Halbbildes, so daß bei der Wiedergabe von Halbbild zu Halbbild eine Messung der zeitlichen Abweichung zwischen Leuchtdichtesignal und Farbsignal, gegebenenfalls eine Änderung der Stellgröße und eine Verringerung der zeitlichen Abweichung erfolgen.

Die Stellgröße bewirkt bei der Wiedergabe grundsätzlich eine zeitliche Verschiebung eines der beiden Signale. Sie kann z. B. eine im Weg des Signals liegende elektronisch steuerbare Laufzeitleitung steuern.

Vorzugsweise wird die Stellgröße zur Verschiebung des Lesetaktes aus dem zur Zeitexpansion dienenden Speicher verwendet, weil dieser Lesetakt die zeitliche Lage der in der Zeit expandierten Signale bestimmt. Die ohnehin für die Zeitexpansion notwendigen Speicher können also durch eine zusätzliche Steuerung zur Änderung der zeitlichen Lage eines der beiden Signale ausgenutzt werden.

Die Erfindung wird anhand der Zeichnung am Beispiel der Aufzeichnung eines Timeplex-Signals näher erläutert.

In der Zeichnung zeigen

Figur 1   ein vereinfachtes Blockschaltbild für die Aufnahme und die Wiedergabe,

Figur 2   Kurven zur Erläuterung der Wirkungsweise des Blockschaltbildes gemäß Fig. 1,

Figur 3   ein erweitertes Blockschaltbild für die Aufnahmeseite und

Figur 4   ein erweitertes Blockschaltbild für die Wiedergabeseite.

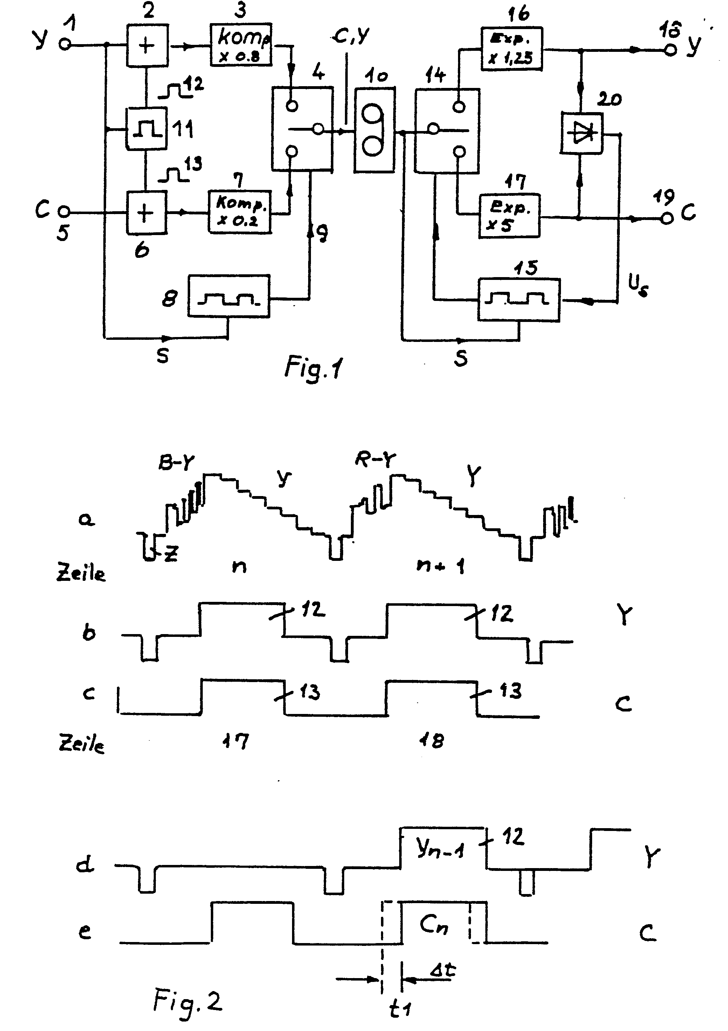

In Fig. 1 wird das Leuchtdichtesignal Y von der Klemme 1 über die Addierstufe 2 dem Zeitkompressor 3 zugeführt, der das Leuchtdichtesignal (BAS-Signal) um den Faktor 0,8 also auf 80 % seiner ursprünglichen Dauer komprimiert. Das derart zeitkomprimierte Leuchtdichtesignal wird dem Umschalter 4 zugeführt. Das Farbsignal C, enthaltend von Zeile zu Zeile abwechselnd die Farbdifferenzsignale B—Y und R—Y, wird von Klemme 5 über die Addierstufe 6 dem Zeitkompressor 7 zugeführt, der das Farbsignal um den Faktor 0,2, d. h. auf 20 % seiner ursprünglichen Dauer komprimiert. Dieses komprimierte Farbsignal C wird dem anderen Eingang des Umschalters 4 zugeführt.

Mit den Synchronimpulsen S aus dem Leuchtdichtesignal Y wird eine Timeplex-Zeit-Steuerschaltung 8 synchronisiert. Diese steuert über die Leitung 9 den Umschalter 4 im Sinne des Timeplexsystems so, daß jeweils in einer Zeile zeitlich nacheinander die zeitkomprimierten Signale Y und C auf dem Videorecorder 10 aufgezeichnet werden.

Die Synchronimpulse S steuern außerdem die Impulsstufe 11, die einen Zähler und einen Tastimpulserzeuger beinhaltet. Die Stufe 11 erzeugt in den Zeilen 17 und 18 sowie 330 und 331 jeweils Markierimpulse 12, 13, die in den Addierstufen 2,6 den Signalen Y und C hinzugefügt werden. Die Markierimpulse 12, 13 haben eine definierte Lage zur Zeilenperiode.

Bei der Wiedergabe wird mit dem Umschalter 14, der entsprechend dem Umschalter 4 von der mit den Synchronimpulsen S gespeisten Timeplex-Zeit-Steuerschaltung 15 gesteuert wird, jeweils das Signal Y dem Zeitexpander 16 und das Signal C dem Zeitexpander 17 zugeführt. Der Expander 16 bewirkt eine Zeitdehnung um den Faktor 1,25 und der Expander 17 eine Zeitdehnung um den Faktor 5. Die Signale Y an der Klemme 18 und C an der Klemme 19 haben dann wieder die ursprüngliche Dauer.

Die Signale Y und C werden außerdem der Vergleichsstufe 20 zugeführt. In der Stufe 20 werden durch zeitselektive Auswertung die Markierimpulse 12, 13 in ihrer zeitlichen Lage zueinander verglichen. Dadurch wird die Stellgröße Us gewonnen, die die unerwünschte zeitliche Verschiebung zwischen den Signalen Y und C anzeigt. Die Stellgröße Us beeinflußt die Steuerschaltung 15 und damit den Lesetakt der Expander 16, 17 in der Weise, daß die zeitliche Verschiebung zwischen den Signalen Y und C ausgeglichen wird und diese Signale Y und C in zeitlicher Übereinstimmung an den Klemmen 18, 19 stehen.

Fig. 2a zeigt den Aufbau des zeitlich komprimierten Timeplex-Signals am Ausgang des Umschalters 4 bzw. am Eingang des Umschalters 14. Das Signal enthält jeweils nach dem Zeilensynchronimpuls Z in der Zeile n zunächst das zeitkomprimierte Farbdifferenzsignal B—Y, anschließend das zeitkomprimierte Leuchtdichtesignal Y und in der Zeile n + 1 zunächst das zeitkomprimierte Farbdifferenzsignal R—Y und anschließend das zeitkomprimierte Leuchtdichtesignal Y.

Fig. 2b zeigt die Markierimpulse 12 während der Zeilen 17 und 18 im Leuchtdichtesignal Y und Fig. 2c die Markierimpulse 13 in denselben Zeilen im Farbsignal C. Diese Impulse 12, 13 sind hinsichtlich zeitlicher Lage, Dauer, Amplitude und Impulsform identisch und erstrecken sich jeweils vom Schwarzwert zum Weißwert.

Fig. 2d, e zeigen die Markierimpulse 12, 13 an den Eingängen der Vergleichsstufe 20. Durch die Wirkungsweise der Timeplex-Wiedergabeschaltung fallen der Markierimpuls 12 aus der Zeile n-1 und der Markierimpuls 13 aus der Zeile n zusammen. Die Stellgröße Us wird gewonnen durch Vergleich der zeitlichen Lage der beiden Vorderflanken der Markierimpulse 12, 13 bei t1. Bei einer Verschiebung der Signale Y und C, die die genannte Bildstörung verursachen würden, sind die Vorderflanken zeitlich um Δt gegeneinander verschoben, so daß eine dieser Verschiebung Δt entsprechende Stellgröße Us auftritt. Der Betrag der Stellgröße ist von dem Betrag der zeitlichen Verschiebung und das Vorzeichen der Stellgröße von der Richtung der Verschiebung abhängig. Die Stellgröße ist z. B. positiv, wenn Y gegenüber C vorteilt und negativ, wenn Y gegenüber C nacheilt, damit die Korrektur mit dem richtigen Betrag und in der richigen Richtung erfolgt.

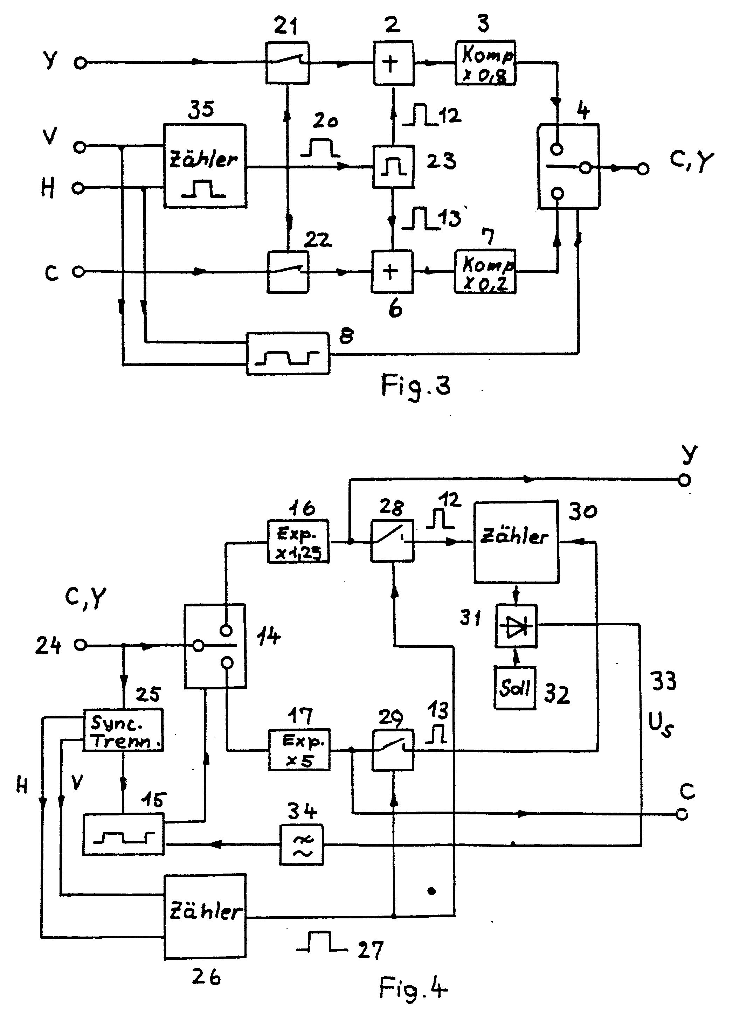

In Fig. 3 wird der Zähler 35 von den vertikalfrequenten Impulsen V und den zeilenfrequenten Impulsen H gesteuert. Der Zähler 35 erzeugt in den Zeilen 17, 18 und 330 und 331 den Austastimpuls 20 mit der Dauer der Zeilenhinlaufzeit. Der Impuls 20 tastet über die Austaststufen 21 und 22 die Signale Y und C aus, um in diesen Zeilen vorhandene Signale für die Eintastung der Markierimpulse zu beseitigen. Der Impuls 20 steuert die Impulsstufe 23, die entsprechend der Stufe 11 in Fig. 1 die Markierimpulse 12, 13 erzeugt. Diese werden wie in Fig. 1 in den Addierstufen 2,6 den Signalen Y und C hinzugefügt.

In Fig. 4 steht an der Klemme 24 wieder das zeitsequentielle, zeitkomprimierte, vom Videorecorder 10 kommende Signal C, Y, das dem Signal am Ausgang des Umschalters 4 in Fig. 3 entspricht. Mit der Synchron-Abtrennstufe 25 werden aus dem Y-Signal wieder die Impulse V und H gewonnen und dem Zähler 26 zugeführt. Dieser erzeugt durch Auszählen der Zeilen 17, 18 und 330, 331 Auftastimpulse 27, die über die Tore 28, 29 die Signale Y und C in diesen Zeilen auf den Zähler 30 schalten. Der Zähler 30 bekommt an seinen beiden Eingängen die in den genannten Teilen aufgezeichneten Markierimpulsen 12, 13. Der linke Eingang des Zählers 30 ist als Start/Stop-Eingang und der rechte Eingang des Zählers 30 als Stop/Start-Eingang ausgebildet. Am Ausgang des Zählers 30 entsteht eine Spannung deren Größe von der zeitlichen Abweichung der Markierimpulse 12, 13 an den beiden Eingängen des Zählers 30 und dessen Vorzeichen von der Richtung dieser Abweichung abhängig ist. Diese Spannung wird in der Vergleichsstufe 31 mit einem Sollwert von der Stufe 32 verglichen. Dadurch wird an der Leitung 33 wiederum die Stellgröße Us gewonnen. Diese wirkt über den Tiefpaß 34 wie in Fig. 1 auf die Timeplex-Steuerschaltung 15 in dem Sinne ein. daß die zeitliche Abweichung der Markierimpulse 12, 13 ausgeglichen wird und somit die Signale Y und C an den Ausgängen der Schaltung zeitlich übereinstimmen. Der Tiefpaß 34 bewirkt, daß in erwünschter Weise die Ausregelung langsam in Stufen erfolgt, und hat z. B. eine Zeitkonstante von 100 ms. Die Zeitkonstante kann relativ groß bemessen werden, da es sich bei der zeitlichen Abweichung nur um sich langsam ändernde Fehler handelt. Dadurch kann die Korrekturschaltung besonders störungsfrei arbeiten.

Die Markierimpulse 12, 13 brauchen bei der Aufnahme nicht unbedingt zeitgleich zu sein, sondern können auch dort bereits einen zeitlichen Versatz haben. Die Regelung bei der Wiedergabe mit der Stellgröße Us kann dann so erfolgen, daß nicht auf zeitliche Abweichung 0, sondern auf eine definierte endliche Abweichung in der zeitlichen Lage der Markierimpulse 12, 13 an den Eingängen des Zählers 30 geregelt wird.

An Hand der Fig. 1-4 wurde die Wirkungsweise der Erfindung für einen Zeitfehler zwischen den beiden Signalen erläutert. Ebenso kann mit den Markiersignalen oder den Markierimpulsen eine Korrektur weiterer Fehler erfolgen, indem z. B. die durch Vergleich der Markiersignale gewonnene Stellgröße die Amplitude oder die Phase eines der Signale beeinflußt.

Die Erfindung ist nicht auf Fernsehsignale beschränkt, sondern kann auch für Stereosignale, Rundfunksignale anwendet werden.

**Patentansprüche**

1. Zeitsequentielles Übertragungssystem, bei dem ein erstes Signal und ein zweites Signal auf der Sendeseite zeitlich komprimiert, zeitsequentiell übertragen und auf der Empfangsseite wieder zeitlich expandiert werden, dadurch gekennzeichnet, daß auf der Sendeseite das erste Signal und das zweite Signal zu definierten Zeitpunkten je ein Markiersignal (12, 13) enthalten, die in einer definierten Beziehung zueinander stehen, und daß auf der Empfangsseite durch Zeitvergleich der Markiersignale (12, 13) ein Korrektursignal zur Korrektur der zeitlichen Lage des ersten und/oder zweiten Signals gewonnen wird.

2. System nach Anspruch 1, dadurch gekennzeichnet, daß auf der Sendeseite das erste Signal zu den definierten Zeitpunkten zusätzlich zu seinem eigenen Signalweg den Signalweg des zweiten Signals durchläuft und daß auf der Empfangsseite die ursprünglich gleichen Signale aus beiden Signalwegen zeitlich verglichen werden und aus dem Phasen- Amplituden- oder Gruppenlaufzeitunterschieden das Korrektursignal gewonnen wird, das auf den zweiten Signalweg einwirkt.

3. System nach Anspruch 1, dadurch gekennzeichnet, daß es als Übertragungssystem für Farbfernsehsignale dient.

4. System nach Anspruch 3, dadurch gekennzeichnet, daß es zur Phasenkorrektur eines Leuchtdichtesignals (Y) und eines Farbsignals (C) dient.

5. System nach Anspruch 2 und 3, dadurch gekennzeichnet, daß das erste Signal das Leuchtdichtesignal (Y) und das zweite Signal das Farbsignal (C) ist.

6. System nach Anspruch 2 und 3, dadurch gekennzeichnet, daß das erste Signal das Farbsignal (C) und das zweite Signal das Leuchtdichtesignal (Y) ist.

7. System nach Anspruch 4, dadurch gekennzeichnet, daß auf der Sendeseite in das Leuchtdichtesignal (Y) und in das Farbsignal (C) je ein einem bestimmten Zeitpunkt der Zeilenperiode zugeordneter Zeit-Markierimpuls (12, 13) eingefügt und auf der Empfangsseite aus dem Zeitabstend (Δt) zwischen den beiden Markierimpulsen (12, 13) eine Stellgröße (Us) zur Einstellung der richtigen Zeitlage zwischen Leuchtdichtesignal (Y) und Farbsignal (C) gewonnen wird.

8. System nach Anspruch 7, dadurch gekennzeichnet, daß als Markierimpuls ein ohnehin im Signal vorhandener Synchronimpuls oder Unbuntwert-Impuls ausgenutzt wird.

9. System nach Anspruch 7, dadurch gekennzeichnet, daß der Markierimpuls (12, 13) die Spannungswerte für Schwarz und Weiß aufweist.

10. System nach Anspruch 7, dadurch gekennzeichnet, daß die beiden Markierimpulse (12, 13) gleiche zeitliche Lage, Dauer, Form und/oder Amplitude aufweisen.

11. System nach Anspruch 7, dadurch gekennzeichnet, daß der Markierimpuls (12, 13) aus mehreren Einzelimpulsen besteht und ein Einzelimpuls bestimmter Ordnungszahl zur Gewinnung der Stellgröße (Us) ausgenutzt wird.

12. System nach Anspruch 7, dadurch gekennzeichnet, daß der Markierimpuls (12, 13) während einer Leerzeile oder Prüfzeile während der Vertikalaustastzeit übertragen wird.

13. System nach Anspruch 7, dadurch gekennzeichnet, daß der Markierimpuls (12, 13) jeweils in zwei zeitlich aufeinanderfolgenden Zeilen (17, 18 ; 330, 331) übertragen wird.

14. System nach Anspruch 7, dadurch gekennzeichnet, daß die Stellgröße (Us) durch Auswertung der Flanken der Markierimpulse (12, 13) gewonnen wird.

15. System nach Anspruch 7 und 12, dadurch gekennzeichnet, daß im Weg der Stellgröße (Us) ein Siebglied (34) mit einer solchen Zeitkonstante liegt, daß eine Abweichung von der richtigen Zeitlage von Halbbild zu Halbbild in kleinen Stufen verringert wird.

16. System nach Anspruch 7, dadurch gekennzeichnet, daß die Stellgröße (Us) ein im Weg eines der Signale (B—Y, Y) liegendes Laufzeitglied steuert.

17. System nach Anspruch 7, dadurch gekennzeichnet, daß die Stellgröße (Us) den Leseakt der zur zeitlichen Expansion dienenden Speicher (16, 17) steuert.

**Claims**

1. A time-sequential transmission system wherein a first signal and a second signal are compressed in time at the transmitting end, transmitted time-sequentially and again expanded in time at the receiving end, characterised in that, at the transmitting end, the first signal and the second signal each contain a marking signal (12, 13) at defined moments, which marking signals are in a defined relationship to one another and that, at the receiving end, a correction signal is obtained by comparison of the marking signals (12, 13), for the correction of the first and/or second signals.

2. A system as claimed in Claim 1, characterised in that, at the transmitting end, the first signal travels, at the defined moments, through the signal path of the second signal in addition to its own signal path and that, at the receiving end, the originally like signals from the two signal paths are compared and the correction signal which acts on the second signal path is obtained from the differences in phase, amplitude or group delay time.

3. A system as claimed in Claim 1, characterised in that it serves as a transmission system for colour television signals.

4. A system as claimed in Claim 3, characterised in that it serves for the phase correction of a luminance signal (Y) and of a colour signal (C).

5. A system as claimed in Claims 2 and 3, characterised in that the first signal is the luminance signal (Y) and the second signal is the colour signal (C).

6. A system as claimed in Claims 2 and 3, characterised in that the first signal is the colour signal (C) and the second signal is the luminance signal (Y).

7. A system as claimed in Claim 4, characterised in that, at the transmitting end, a time marking pulse (12, 13) associated with a specific moment in the line period is introduced into each of the luminance signal (Y) and the colour signal (C) and at the receiving end, a correcting variable (Us) is obtained from the interval in time ($\Delta t$) between the two marking pulses (12, 13) to adjust the correct position in time between luminance signal (Y) and colour signal (C).

8. A system as claimed in Claim 7, characterised in that a synchronizing pulse or achromatic value pulse, present in the signal in any case, is used as a marking pulse.

9. A system as claimed in Claim 7, characterised in that the marking pulse (12, 13) comprises the voltage values for black and white.

10. A system as claimed in Claim 7, characterised in that the two marking pulses (12, 13) have the same position in time, duration, shape and/or amplitude.

11. A system as claimed in Claim 7, characterised in that the marking pulse (12, 13) consists of a plurality of individual pulses and an individual pulse having a specific ordinal number is used to obtain the correcting variable (Us).

12. A system as claimed in Claim 7, characterised in that the marking pulse (12, 13) is transmitted during a blank line or test line during the vertical blanking time.

13. A system as claimed in Claim 7, characterised in that the marking pulse (12, 13) is transmitted in each of two lines (17, 18 ; 330, 331) succeeding one another in time.

14. A system as claimed in Claim 7, characterised in that the correcting variable (Us) is obtained by evaluating the edges of the marking pulses (12, 13).

15. A system as claimed in Claims 7 and 12, characterised in that a filter section (34) lies in the path of the correcting variable and has such a time constant that a deviation from the correct position in time is reduced in small stages from one field to the next.

16. A system as claimed in Claim 7, characterised in that the correcting variable (Us) controls a delay network lying in the path of one of the signals (B—Y, Y).

17. A system as claimed in Claim 7, characterised in that the correcting variable (Us) controls the reading timing of the store (16, 17) serving for the expansion in time.

**Revendications**

1. Système de transmission séquentielle dans le temps, dans lequel un premier signal et un second signal sont comprimés temporellement du côté-émission, sont transmis séquentiellement dans le temps et sont à nouveau expansés temporellement du côté-réception, caractérisé en ce que, du côté-émission, le premier signal et le second signal contiennent à des instants définis chacun un signal de repérage (12, 13), ces deux signaux de repérage étant dans une relation définie l'un par rapport à l'autre, et en ce que, du côté-réception, par comparaison des signaux de repérage (12, 13), un signal de correction est obtenu pour une correction du premier et/ou du second signal.

2. Système selon la revendication 1, caractérisé en ce que, du côté-émission, le premier signal parcourt, à des instants définis, en addition à sa voie propre, la voie du second signal et en ce que, du côté-réception, les signaux identiques à l'origine et provenant des deux voies de transmission sont comparés et, à partir des différences de phases, d'amplitudes ou de temps de propagation de groupes, on obtient le signal de correction qui agit sur la seconde voie de transmission de signaux.

3. Système selon la revendication 1, caractérisé en ce qu'il sert de système de transmission pour des signaux de télévision en couleur.

4. Système selon la revendication 3, caractérisé en ce qu'il sert à la correction de phase d'un signal de luminance (Y) et d'un signal de couleur (C).

5. Système selon les revendications 2 et 3, caractérisé en ce que le premier signal est le signal de luminance (Y) et le second signal le signal de couleur (C).

6. Système selon les revendications 2 et 3,

caractérisé en ce que le premier signal est le signal de couleur (C) et le second signal le signal de luminance (Y).

7. Système selon la revendication 4, caractérisé en ce que, du côté-émission une impulsion de repérage temporelle (12, 13), associée à un instant déterminé de la période de ligne, est introduite dans le signal de luminance (Y) et dans le signal de couleur (C) et, du côté-réception, une grandeur de réglage (Us) est obtenue à partir de l'intervalle de temps (Δt) entre les deux impulsions de repérage (12, 13) en vue du réglage de l'intervalle temporel correct entre le signal de luminance (Y) et le signal de couleur (C).

8. Système selon la revendication 7, caractérisé en ce qu'on utilise comme impulsion de repérage une impulsion de synchronisation ou une impulsion achromatique existant en outre dans le signal.

9. Système selon la revendication 7, caractérisé en ce que l'impulsion de repérage (12, 13) possède les mêmes valeurs de tension pour le noir et blanc.

10. Système selon la revendication 7, caractérisé en ce que les deux impulsions de repérage (12, 13) ont temporellement une position, une durée, une forme et/ou une amplitude identiques.

11. Système selon la revendication 7, caractérisé en ce que l'impulsion de repérage (12, 13) se compose de plusieurs impulsions unitaires et une impulsion unitaire de numéro d'ordre déterminé est utilisée pour obtenir la grandeur de réglage (Us).

12. Système selon la revendication 7, caractérisé en ce que l'impulsion de repérage (12, 13) est transmise, pendant une ligne vide ou une ligne de contrôle, au cours de la période de balayage vertical.

13. Système selon la revendication 7, caractérisé en ce que l'impulsion de repérage (12, 13) est transmise à chaque fois dans deux lignes temporellement successives (17, 18, 330, 331).

14. Système selon la revendication 7, caractérisé en ce que la grandeur de réglage (Us) est obtenue par utilisation des flancs des impulsions de repérage (12, 13).

15. Système selon les revendications 7 et 12, caractérisé en ce que, dans la voie de la grandeur de réglage (Us), il est prévu un organe de filtrage (34) ayant une constante de temps telle qu'un écart par rapport à la position temporelle correcte est réduit de trame en trame par petits échelons.

16. Système selon la revendication 7, caractérisé en ce que la grandeur de réglage (Us) commande un organe de propagation placé dans la voie d'un des signaux (B—Y, Y).

17. Système selon la revendication 7, caractérisé en ce que la grandeur de réglage (Us) commande l'opération de lecture des mémoires (16, 17) servant à une expansion temporelle.

Fig.1

Fig.2

Fig. 3

Fig. 4